# DEMANDE DE BREVET EUROPEEN

(11) **EP 1 585 204 A1**
(43) Date de publication de la demande: **12.10.2005**
(21) Numéro de dépôt: 04290929.1
(22) Date de dépôt: 07.04.2004
(51) Int. Cl.: H02G 3/04, H02G 9/06

(54) **Système de transmission d'énergie à haute tension**

(71) Demandeur: Nexans, 75008 Paris (FR)
(72) Inventeur: Becker, Jean, 62610 Autingues (FR); Chauzu, Albert, 69330 Meyzieu (FR); Aspiazu, José c/o Nexans, 75008 Paris (FR); Mattmann, John-Peter, 2014 Bôle (CH)
(74) Mandataire: Lenne, Laurence

(57) **Abrégé**

La présente invention concerne un système de transmission d'énergie électrique, plus particulièrement adapté à des transmissions souterraines à haute tension. Ce système de transmission (10) d'énergie électrique comporte des moyens de transmission de l'énergie électrique comprenant au moins un câble électrique (12) de puissance, un conduit (11) d'installation dudit câble comportant une cavité intérieure (21), ledit câble électrique étant logé à l'intérieur de ladite cavité dudit conduit et s'étendant le long dudit conduit et des moyens (15) conducteurs de mise à la masse. Lesdits moyens (15) conducteurs de mise à la masse sont indépendants desdits moyens de transmission de l'énergie électrique.

## Description

La présente invention concerne un système de transmission d'énergie électrique, plus particulièrement adapté à des transmissions souterraines à haute tension.

Il est connu d'utiliser des conduits d'installation ou tuyaux (« pipe » en anglais) dans lesquels sont logés un ou plusieurs câbles de puissance souterrains afin de protéger ces derniers de l'humidité mais aussi de dégâts susceptibles d'être provoqués par des rongeurs. Ce type de conduit permet notamment la transmission de courant alternatif et comporte trois câbles de puissance comprenant chacun un conducteur de phase, permettant une transmission triphasée.

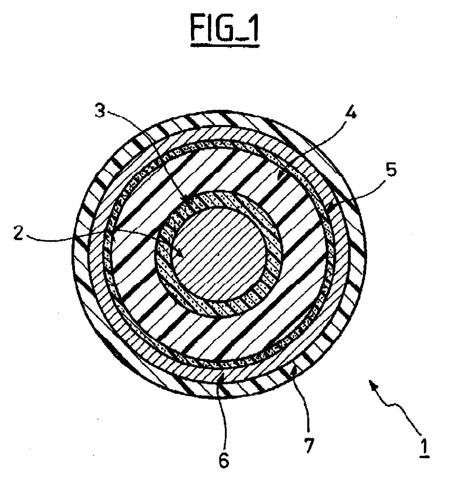

Comme représenté en figure 1, un câble 1 de puissance utilisé dans ce type de conduit comprend coaxialement un conducteur central 2 en cuivre ou aluminium, un écran semi-conducteur interne 3, une couche isolante 4 réalisée dans un matériau tel que du polyéthylène réticulé PRC (XLPE « cross-linked polyethylene » en anglais) ou du caoutchouc d'éthylène propylène EPR (« Ethylene Propylene Rubber » en anglais) et un écran semi-conducteur externe 5. On y ajoute un écran métallique 6 au-dessus de l'écran semi-conducteur externe 5. Cet écran métallique 6 possède un rôle d'écran électrique permettant la mise à la masse et l'acheminement de courants induits ou de court-circuit. Le câble 1 comporte également une gaine de protection externe 7. L'écran métallique 6 est par exemple une feuille d'aluminium d'épaisseur suffisamment élevée, roulée et collée pour adhérer à la gaine de protection externe 7.

Un tel câble est ensuite enroulé sur un touret pour être transporté sur le site d'installation.

Une telle structure présente cependant certaines difficultés.

En effet, chaque touret peut supporter un volume limité de câble. L'utilisation d'un écran métallique, qui doit être suffisamment épais pour assurer la mise à la masse du câble, limite la longueur de câble susceptible d'être enroulée sur le touret. Ainsi, il peut s'avérer nécessaire d'utiliser et transporter un grand nombre de tourets lorsqu'on doit installer une ligne de longueur importante, entraînant de ce fait un coût de transport élevé.

En outre, l'utilisation de plusieurs portions de câbles enroulées chacune sur un touret nécessite ensuite de réaliser plusieurs jonctions entre ces portions afin de réaliser la ligne. Ces jonctions nécessitent un temps important d'installation et sont très délicates à installer. Le coût des jonctions est de surcroît non négligeable.

De plus, le métal utilisé pour réaliser l'écran métallique est lui-même assez coûteux et lourd.

La présente invention vise à fournir un système de transmission d'énergie permettant de réduire le nombre de tourets à transporter pour son installation, réalisé de manière économique et plus légère et comportant une plus grande longueur de câble sans jonction tout en assurant une fonction efficace de mise à la masse.

La présente invention propose à cet effet un système de transmission d'énergie électrique comportant :
- des moyens de transmission de l'énergie électrique comprenant au moins un câble électrique de puissance haute ou moyenne tension,
- un conduit d'installation dudit câble comportant une cavité intérieure, ledit câble électrique étant logé à l'intérieur de ladite cavité dudit conduit et s'étendant le long dudit conduit,
- des moyens conducteurs de mise à la masse,
ledit système étant **caractérisé en ce que** lesdits moyens conducteurs de mise à la masse sont indépendants desdits moyens de transmission de l'énergie électrique.

Grâce à l'invention, les moyens conducteurs de mise à la masse sont délocalisés du câble de puissance qui ne nécessite plus d'écran métallique de mise à la masse. La section du câble est ainsi réduite permettant de ce fait d'enrouler une plus grande longueur de câble sur un même touret et de diminuer le nombre de jonctions lors de l'installation. La réduction du nombre de tourets a un impact important sur le coût de transport sur le site d'installation. La réduction du nombre de jonctions induit une réduction du coût d'installation sur ce même site.

De plus, les moyens conducteurs de mise à la masse étant présents indépendamment du câble électrique, un autre câble électrique dans le conduit ne nécessite pas non plus d'écran métallique. Une telle solution permet donc un gain important en poids et coût total de métal utilisé.

Selon un premier mode de réalisation, lesdits moyens conducteurs de mise à la masse sont un écran métallique intégré le long dudit conduit.

Selon ce premier mode de réalisation, de manière avantageuse, ledit conduit comporte au moins une couche de matière plastique entourant ledit écran métallique.

Selon un deuxième mode de réalisation, lesdits moyens conducteurs de mise à la masse sont un élément conducteur nu, ledit élément conducteur s'étendant le long dudit conduit.

Selon ce mode de réalisation, lesdits moyens conducteurs de mise à la masse sont situés le long de la surface interne dudit conduit.

Avantageusement, ledit câble électrique de puissance a une couche externe conductrice ou semi-conductrice en contact électrique avec lesdits moyens conducteurs de mise à la masse.

Avantageusement, ledit câble électrique haute tension comporte au moins coaxialement un conducteur central et une couche d'isolation sèche telle qu'une couche en polyéthylène réticulé PRC.

De manière particulièrement avantageuse, lesdits moyens de transmission de l'énergie électrique comportent une pluralité de câbles électriques de puissance.

Ainsi, le système peut comporter trois câbles comportant chacun un conducteur de phase, permettant de transmettre les trois phases d'un courant alternatif sans qu'aucun des câbles ne comprenne un écran spécifique de mise à la masse.

D'autres caractéristiques et avantages de la présente invention apparaîtront dans la description suivante de modes de réalisation de l'invention, donnés à titre illustratif et nullement limitatif.

Dans les figures suivantes :
- La figure 1 représente schématiquement en coupe transversale, un câble de puissance selon l'état de la technique,
- La figure 2 représente schématiquement en coupe transversale, un premier mode de réalisation d'un système de transmission d'énergie électrique selon l'invention,
- La figure 3 représente schématiquement en coupe transversale, un deuxième mode de réalisation d'un système de transmission d'énergie électrique selon l'invention,

La figure 1 a déjà été décrite en relation avec l'état de la technique.

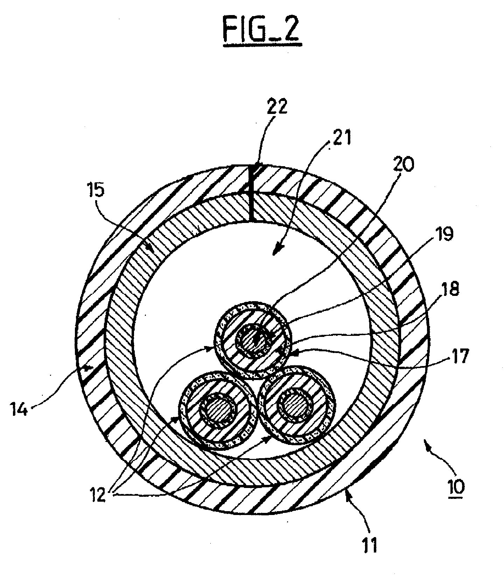

La figure 2 représente schématiquement en coupe transversale, un premier mode de réalisation d'un système de transmission 10 d'énergie électrique selon l'invention.

Le système 10 comporte :
- un conduit d'installation 11,
- trois câbles de puissance 12.

Le conduit 11 comporte coaxialement, de l'intérieur vers l'extérieur :
- un écran 15 en métal tel que le cuivre ou l'aluminium délimitant une cavité centrale 21,
- une couche 14 en matière plastique telle que du polyéthylène ou du PVC (polychlorure de vinyle).

Chacun des câbles de puissance 12 comporte coaxialement, de l'intérieur vers l'extérieur :
- un conducteur central 20 en cuivre ou en aluminium,
- un écran semi-conducteur interne 19,
- une couche isolante 18 réalisée dans un matériau tel que du polyéthylène réticulé PRC,
- un écran semi-conducteur externe 17.

Les câbles de puissance 12 se différencient du câble de puissance tel que représenté en figure 1 en ce qu'ils ne comportent pas de gaine de protection externe.

Chacun des câbles de puissance 12 peut éventuellement être muni d'une couche mince métallique externe non représentée et/ou d'un élément en spiral non représenté pour faciliter le tirage dans le conduit.

La cavité centrale 21 est étanche par rapport à l'extérieur du conduit 11 et reçoit de manière libre les câbles 12.

Les trois câbles 12 sont disposés en triangle à l'intérieur de la cavité 21 et permettent de transmettre les trois phases d'un courant alternatif triphasé. Les trois câbles peuvent également être juxtaposés à l'intérieur de la cavité.

L'écran métallique 15 intégré au conduit 11 permet la mise à la masse et l'acheminement de courants induits et de court-circuit éventuel et est délocalisé et indépendant des câbles 12, ces derniers ne nécessitant plus d'écran métallique de mise à la masse.

L'installation d'une ligne de transmission se fait en partant d'une surface plane comportant les deux épaisseurs 14 et 15 du conduit 11 sur laquelle on dépose les câbles 12 de puissance. Cette surface plane est ensuite enroulée de manière à former la cavité 21, les deux extrémités de la surface plane étant par exemple soudées ou collées au niveau de la surface 22. Une telle méthode d'installation est décrite dans le document DE3718275.

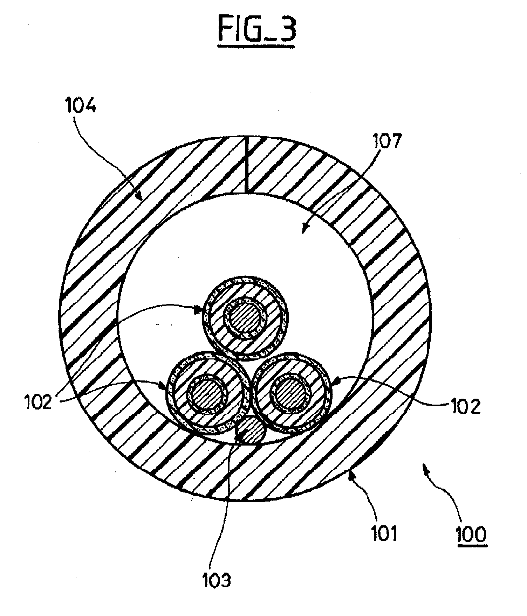

La figure 3 représente schématiquement en coupe transversale, un deuxième mode de réalisation d'un système de transmission 100 d'énergie électrique selon l'invention.

Le système 100 comporte :
- un conduit d'installation 101,
- trois câbles de puissance 102,
- des moyens 103 conducteurs de mise à la masse.

Le conduit 101 comporte une couche 104 en matière plastique telle que du polyéthylène ou du PVC (polychlorure de vinyle), délimitant une cavité centrale 107.

Chacun des câbles de puissance 102 a une structure identique aux câbles de puissance décrits en référence à la figure 2.

Les moyens 103 conducteurs de mise à la masse sont un élément conducteur nu s'étendant le long de la surface interne du conduit 101, en aluminium ou en cuivre.

Les trois câbles 102 sont disposés en triangle à l'intérieur de la cavité 107 et permettent de transmettre les trois phases d'un courant alternatif triphasé. Les écrans semi-conducteurs externes des câbles 102 sont en contact les uns avec les autres de sorte qu'une conduction électrique est établie entre ces écrans.

Les moyens conducteurs 103 sont en contact électrique avec au moins un des écrans semi-conducteurs des câbles 102 de sorte qu'une conduction électrique est établie entre les moyens conducteurs 103 et chacun des écrans semi-conducteurs.

Les moyens 103 permettent la mise à la masse et l'acheminement de courants induits ou de court-circuit éventuel et sont délocalisé et indépendants des câbles 102, ces derniers ne nécessitant plus d'écran métallique de mise à la masse.

Bien entendu, l'invention n'est pas limitée aux modes de réalisation qui viennent d'être décrits.

Notamment, le XLPE utilisé comme matériau isolant peut être remplacé par du caoutchouc d'éthylène propylène EPR ou tout autre matériau adéquat.

De plus, les modes de réalisation décrits portent sur un système triphasé mais l'invention peut être généralisée à un nombre quelconque de câbles.

En outre, les conduits tels que décrits comportent une couche de matière plastique mais on peut envisager d'utiliser plusieurs couches réalisées avec des matières plastiques différentes ou de différentes couleurs.

Les câbles de puissance tels que décrits ne possèdent pas d'écran métallique mais il est possible d'y inclure un écran métallique très fin ayant un rôle de protection et non de mise à la masse.

Enfin, on pourra remplacer tout moyen par un moyen équivalent sans sortir du cadre de l'invention.

## Revendications

1. Système de transmission (10, 100) d'énergie électrique comportant :
- des moyens de transmission de l'énergie électrique comprenant au moins un câble électrique (12, 102) de puissance haute ou moyenne tension,
- un conduit (11, 101) d'installation dudit câble comportant une cavité intérieure (21, 107), ledit câble électrique étant logé à l'intérieur de ladite cavité dudit conduit et s'étendant le long dudit conduit,
- des moyens (15, 103) conducteurs de mise à la masse,
ledit système étant **caractérisé en ce que** lesdits moyens conducteurs de mise à la masse sont indépendants desdits moyens de transmission de l'énergie électrique.

2. Système (10) selon la revendication 1 **caractérisé en ce que** lesdits moyens conducteurs de mise à la masse sont un écran (15) métallique intégré le long dudit conduit.

3. Système (10) selon la revendication précédente **caractérisé en ce que** ledit conduit comporte au moins une couche (14) de matière plastique entourant ledit écran métallique.

4. Système (100) selon l'une des revendications 1 **caractérisé en ce que** lesdits moyens conducteurs de mise à la masse sont un élément conducteur nu (103), ledit élément conducteur s'étendant le long dudit conduit.

5. Système (100) selon la revendication précédente **caractérisé en ce que** lesdits moyens (103) conducteurs de mise à la masse sont situés le long de la surface interne dudit conduit.

6. Système (10) selon l'une des revendications précédentes **caractérisé en ce que** ledit câble électrique (12) de puissance a une couche (17) externe conductrice ou semi-conductrice en contact électrique avec lesdits moyens conducteurs (15) de mise à la masse.

7. Système (10) selon l'une des revendications précédentes **caractérisé en ce que** ledit câble électrique (12) haute tension comporte au moins coaxialement un conducteur central (20) et une couche (18) d'isolation sèche telle qu'une couche en polyéthylène réticulé.

8. Système (10, 100) selon l'une des revendications précédentes **caractérisé en ce que** lesdits moyens de transmission de l'énergie électrique comportent une pluralité de câbles électriques de puissance.
